# EUROPÄISCHE PATENTSCHRIFT

(11) **EP 1 614 521 B1**
(45) Veröffentlichungstag und Bekanntmachung des Hinweises auf die Patenterteilung: **17.12.2014**
(21) Anmeldenummer: 05013232.3
(22) Anmeldetag: 18.06.2005
(51) Int. Cl.: B29C 45/27

(54) **Werkzeugeinsatz für den Anschnitt einer Heisskanaldüse für eine Spritzgiessmaschine**
Tool insert for the gate of a hot runner nozzle for an injection moulding machine
Insert pour le seuil d'injection d'une buse à canal chaud pour une presse à injecter

(30) Priorität: 10.07.2004 DE 102004033469
(43) Veröffentlichungstag der Anmeldung: 11.01.2006
(73) Patentinhaber: INCOE INTERNATIONAL, INC., 63322 Rödermark (DE)
(72) Erfinder: Goinski, Michael Dipl. Ing., 63110 Rodgau (DE)
(74) Vertreter: Boecker, Joachim

(56) Entgegenhaltungen:
- EP-A- 0 933 186
- US-A- 4 266 723
- PATENT ABSTRACTS OF JAPAN Bd. 012, Nr. 364 (M-747), 29. September 1988 (1988-09-29) & JP 63 120625 A (MITSUBISHI METAL CORP), 25. Mai 1988 (1988-05-25)
- PATENT ABSTRACTS OF JAPAN Bd. 017, Nr. 300 (M-1426), 8. Juni 1993 (1993-06-08) -& JP 05 024076 A (FUJI PHOTO FILM CO LTD), 2. Februar 1993 (1993-02-02)
- PATENT ABSTRACTS OF JAPAN Bd. 1996, Nr. 03, 29. März 1996 (1996-03-29) -& JP 07 290539 A (MITSUBISHI MATERIALS CORP), 7. November 1995 (1995-11-07)
- PATENT ABSTRACTS OF JAPAN Bd. 1999, Nr. 01, 29. Januar 1999 (1999-01-29) & JP 10 286843 A (MEIKI CO LTD), 27. Oktober 1998 (1998-10-27)

## Beschreibung

Die vorliegende Erfindung bezieht sich auf einen Werkzeugeinsatz mit Werkzeug-Kühhleinrichtung für den Anschnitt einer Heißkanaldüse für eine Spritzgießmaschine gemäß dem Oberbegriff des Anspruches 1.

Beim Spritzgießen wird heiße Schmelze von einer Spritzgießmaschine entweder direkt oder über ein Heißkanalverteilersystem mittels einer Heißkanaldüse in das Werkzeug (Spritzform) eingespritzt. Das Werkzeug besteht aus einer die Heißkanaldüse aufnehmenden Spritzseite, in welcher sich in der Regel die Außenform (Kavität) des zu gießenden Kunststoffteils befindet, und einer Auswerferseite mit der Innenform (Kern). Der Bereich, in welchem die Heißkanaldüse an das Werkzeug und an.das Kunststoffteil anschließt, wird als "Abschnitt" bezeichnet. Der vordere, werkzeugseitige Teil der Heißkanaldüse mit dem Anschnittbereich steckt beim Spritzgießen in einer Ausnehmung des Werkzeugs. Im hinteren Bereich stützt sich die Düse axial am Heißkanalverteilerblock ab und ist mit dem vorderen Anschnittteil mittels Präzisionsdichtung im Werkzeug fixiert. Dort ist die Düse starken mechanischen und thermischen Beanspruchungen ausgesetzt.

Da der Anschnittbereich der Düse folglich einem schnellen Verschleiß unterliegt, ist er nicht als integrales Teil der Heißkanaldüse ausgebildet, sondern als ein austauschbarer Werkzeugeinsatz, Wichtig ist beim Spritzgießen eine thermische Trennung zwischen Düse und Werkzeug. Die ins Werkzeug eingespritzte Schmelze soll schnell erstarren, während die in der Düsenspitze zurückgehaltene Schmelze flüssig bleiben soll. Es ist daher bekannt, den werkzeugeinsatz mittels eines Kühlmittel, zum Beispiel Wasser, zu kühlen. Zu diesem Zweck münden an der Wand der in der Regel zylindrischen Werkzeug-Ausnehmung im Werkzeug diametral gegenüberliegend ein Zuführ- und ein Abführkanal für ein dem Werkzeug zugeführtes Kühlmittel, und der Werkzeugeinsatz ist an seiner Außenseite in Höhe der beiden genannten Kanäle mit einer Ringnut versehen, über die das Kühlmittel vom Zuführkanal zum Abführkanal strömen kann.

Die Druckschrift Patent Abstracts of Japan JP 63120625 zeigt einen Kühleinsatz für den Angußtrichter einer Spritzgießanlage. Der Kühleinsatz dient dem Zweck, die Schmelze im Angußkanal, der sich im zentralen Bereich des Kühleinsatzes befindet, zu kühlen, um eine möglichst schnelle Erstarrung der Schmelze im Angußkanal zu erreichen. Der erstarrte Angußtrichter kann dann zwischen je zwei Gießvorgänge in schnellerer Folge aus dem Angußkanal herausgezogen werden. Zu diesem Zweck werden ein Zuführkanal und ein Abführkanal für das Kühlmittel seitlich und diametral gegenüberliegend an den Kühleinsatz herangeführt und das Kühlmittel in achsiale Bohrungen geleitet, die möglichst dicht am Angußkanal (Schmelzekanal), also im Zentrum, des Kühleinsatzes liegen und die am unteren Ende des Kühleinsatzes miteinander verbunden sind.

Aus der EP 0 933 186 A ist bereits ein Werkzeugeinsatz gemäß dem Oberbegriff des Anspruchs 1 mit Werkzeugkühleinrichtung für den Anschnitt einer Heißkanaldüse für eine Spritzgießmaschine bekannt. Dieser Werkzeugeinsatz besteht aus zwei konzentrischen, im wesentlichen zylinderförmigen Ringen, die aus unterschiedlichem Material bestehen. Der innere Ring dient der Aufnahme der Spritzdüse.

Der Erfindung liegt die Aufgabe zugrunde, den bekannten Werkzeugeinsatz derart weiter zu entwickeln, dass eine einfachere Herstellung und ein einfacherer Aufbau des werkzeugeinsatzes möglich ist und dass seine Kühlung im Vergleich zu der eingangs genannten bekannten Kühlungsweise wesentlich verbessert wird.

zur Lösung dieser Aufgabe wird ein Werkzeugeinsatz gemäß dem Oberbegriff des Anspruches 1 vorgeschlagen, welcher erfindungsgemäß die im kennzeichnenden Teil des Anspruches 1, genannten Merkmale hat.

Weitere Ausgestaltungen der Erfindung sind in den Unteransprüchen genannt.

Durch die Erfindung werden durch die geschaffenen Hohlräume oder Kammern zwischen dem Aufnahmekopf des Werkzeugeinsatzes und der Ausnehmung in dem Werkzeug Räume mit großen angrenzenden Flächen des Aufnahmekopfes geschaffen, an denen das Kühlmittel vorbeiströmt. Hierdurch wird eine intensivere Kühlung erreicht, als durch die oben genannte bekannte Ringnut am Aufnahmekopf, über die das Kühlmittel nur einen geringen Teil der Oberfläche des Aufnahmekopfes bestreicht.

Die Hohlräume können beispielsweise durch Abflachungen an der Außenwand des an sich zylindrischen Aufnahmekopfes des Werkzeugeinsatzes gewonnen werden.

Die Strömungsverbindung zwischen den benachbarten Hohlräumen oder Kammern erfolgt vorzugsweise in möglichst großer Entfernung von dem Zufluß- und Abflußkanal für das Kühlmittel im Werkzeug.

Die Kanten der schneidfähigen Vorsprünge können durch eine leichte Abflachung oder Abrundung leicht entschärft werden.

Anhand der in den Figuren gezeigten Ausführungsbeispiele soll die Erfindung näher erläutert werden. Es zeigen:
- Figur 1: ein erstes Ausführungsbeispiel eines Werkzeugeinsatzes gemäß der Erfindung in Draufsicht, gesehen von der Seite des Werkzeugs,
- Figur 2: den in ein Werkzeug eingesetzten Werkzeugeinsatz gemäß Figur 1 im Schitt längs der Linie A-A in Figur 1,
- Figur 3: den in ein Werkzeug eingesetzten Werkzeugeinsatz gemäß Figur 1 im Schitt längs der Linie B-B in Figur 1,
- Figur 4: den Werkzeugeinsatz gemäß den Figuren 1 bis 3 in perspektivischer Ansicht,
- Figur 5a: im vergrößerten Maßstab ein Details im Schnitt längs der Linie C-C in Figur 2,
- Figur 5b: im vergrößerten Maßstab ein Details im Schnitt längs der Linie D-D in Figur 2,
- Figur 5c: eine zweite Ausführungsform der Erfindung, die eine Abwandlung der in den Figuren 1 bis 5b gezeigten Ausführungsform dargestellt,
- Figur 6: eine dritte Ausführungsform der Erfindung, die sich lediglich im Bereich des Kreises A in Figur 2 vom der in den Figuren 1 bis 5b gezeigten Ausführungsform unterscheidet.

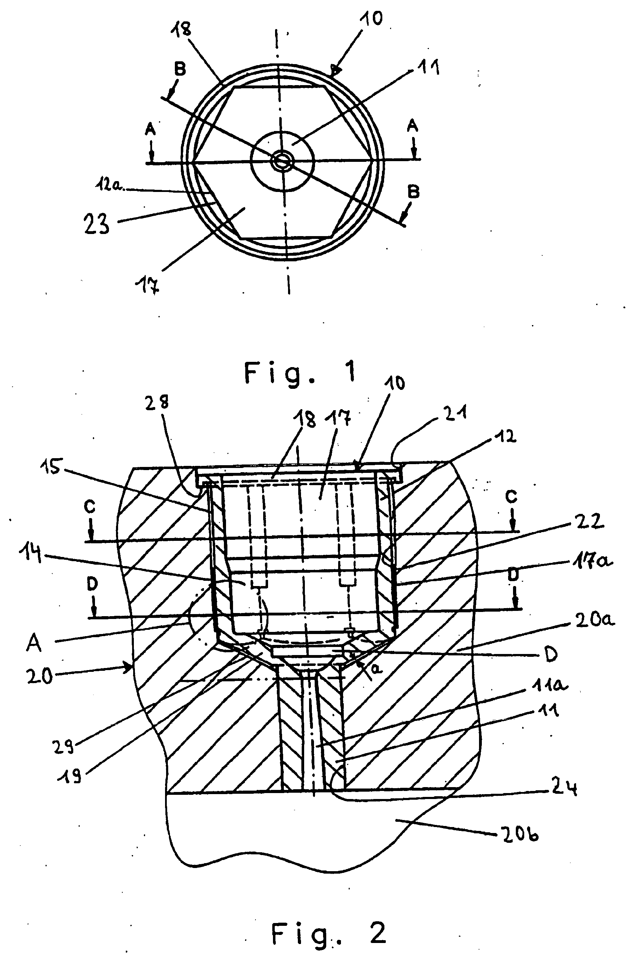

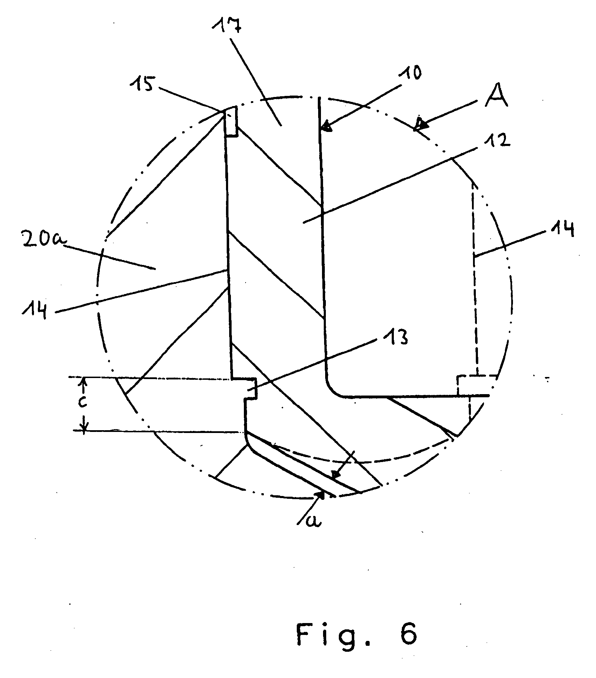

In Figur 2 ist mit 20 ein Ausschnitt aus dem Werkzeug (Form) bezeichnet. Dabei bezeichnet 20a die Wand der Spritzseite des Werkzeugs und 20b die Kavität. Der Werkzeugeinsatz 10 besteht aus einem zylindrischen Paßteil 11 mit Fließkanal 11a für die Schmelze und einem Aufnahmekopf 12 zur Aufnahme einer nicht dargestellten Spritzdüse. Im Werkzeug selbst befindet sich eine Ausnehmung 21, die aus einer Paßbohrung 24 zur Aufnahme des Paßteils 11 und eine Aufnahmebohrung 22 zur Aufnahme des Aufnahmekopfes 12 des Werkzeugeinsatzes besteht. Die Dichtung zwischen der nicht dargestellten Düse und Werkzeugeinsatz erfolgt über die in Figur 2 mit D bezeichneten zylinderflächen von Werkzeugeinsatz 10 und Düse. Sowohl in der Werkzeug-Ausnehmung 21 als auch am Werkzeugeinsatz 10 erfolgt der Übergang von dem im Sinne der Figur 2 oberen zylindrischen Teil 22,12 zu dem unteren zylindrischen Teil 24,11 in der Regel über ein kegelstumpf-förmigesübergangsstück 19,29 (siehe auch Figur 6).

Die achsiale Endlage des werkzeugeinsatzes im Werkzeug wird bestimmt durch das Zusammenwirken eines Flansches 18 am vom Werkzeug abgewendeten Ende des Werkzeugeinsatzes und durch die Tiefe eines entsprechend bemessenen, erweiterten Absatzes 28 am Eingang der Werkzeug-Ausnehmung 21. Zwischen dem Flansch 18 und seiner Auflage auf dem erweiterten Absatz 28 befindet sich eine nicht dargestellte Dichtung. Die achsiale Endlage des Werkzeugeinsatzes ist so bemessen, daß bei Auflage des Flansches 18 auf dem Absatz 28 ein gewisser Spalt a (Figuren 2 und 6) zwischen dem kegelstumpf-förmigen Übergangsstück 19 des Werkzeugeinsatzes und dem Boden 29 der Aufnahmebohrung 22 vorhanden bleibt. Hierdurch wird neben der im folgenden beschriebenen Wirkung eine thermische Trennung und eine statisch bestimmte Anlage des Werkzeugeinsatzes in der Werkzeug-Ausnehmung 21 erreicht. Der soweit beschriebene Gegenstand gehört zum Stande der Technik.

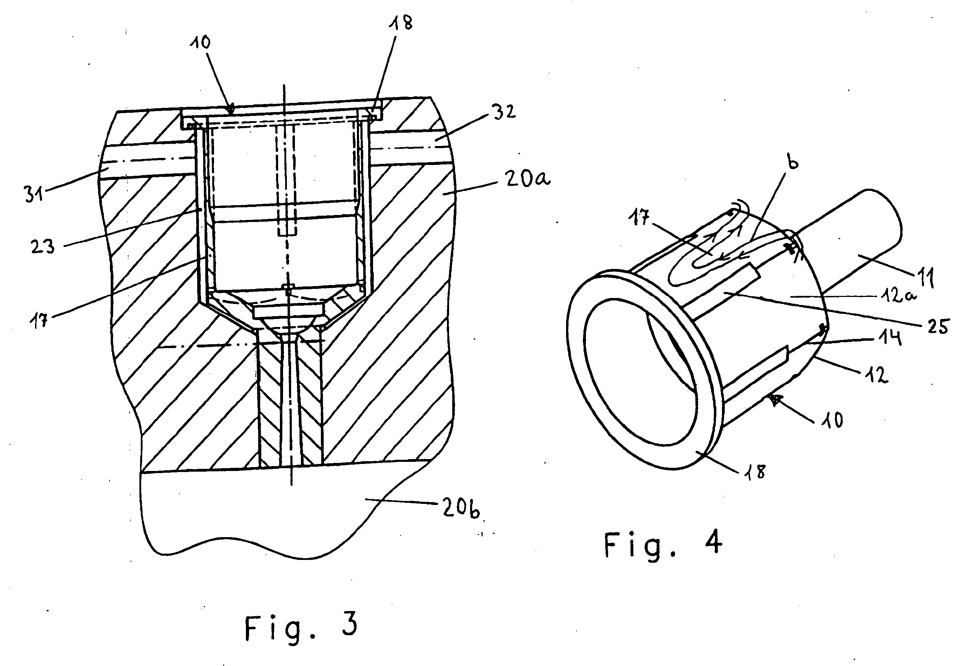

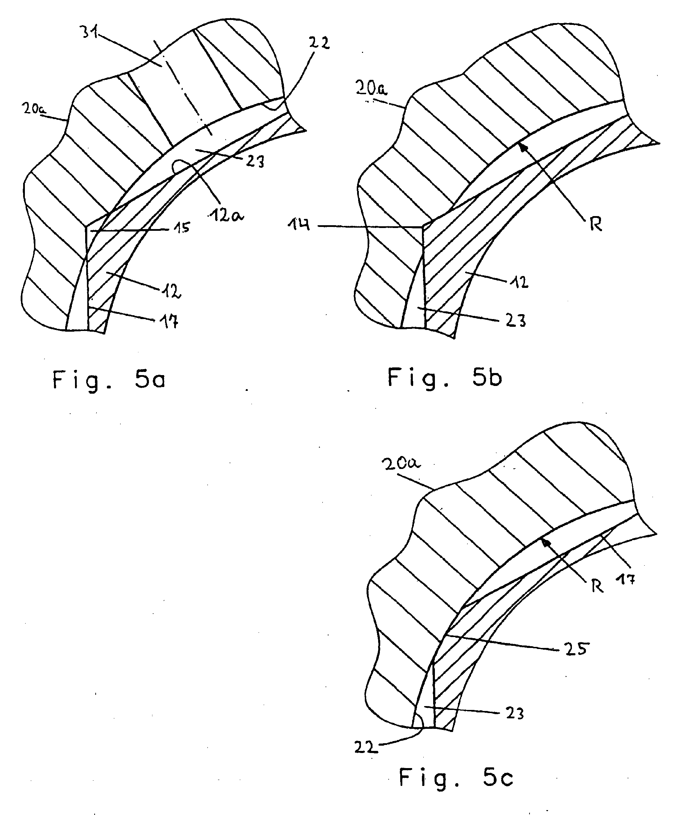

Bei dem in den Figuren 1 bis 5b gezeigten Ausführungsbeispiel der Erfindung ist mit Ausnahme des Flansches 18 die normalerweise kreiszylindrische äußeren Mantelfläche 12a des Aufnahmekopfes 12 über ihre gesamte Länge als ein regelmäßiger Sechskantkörper 17 ausgebildet (siehe Figuren 4, 5a und 5b). Dadurch bilden sich zwischen der kreiszylindrischen Innenwand der Aufnahmebohrung 22 und dem Sechskantkörper sechs Hohlräume oder Kammern 23, die in Umfangsrichtung voneinander getrennt und im wesentlichen gegeneinander abgedichtet sind. Von zwei diametral gegenüber liegenden Kammern 23 ist die eine, vorzugsweise mittig und oben, an den im Werkzeug vorgesehenen Zuführkanal 31 für das Kühlmittel angeschlossen und die andere an den Abführkanal 32 für das Kühlmittel.

Die gegenseitige Trennung der Kammern 23 kann beispielsweise dadurch erreicht werden, daß der Durchmesser des Sechskantkörpers, gemessen zwischen zwei diametral gegenüber liegenden Kanten, größer gewählt wird, als der Durchmesser R der Aufnahmebohrung 22 (siehe Figur 5b). Anschließend kann der Sechskantkörper dann auf das Durchmessermaß R der Aufnahmebohrung abgedreht werden, so daß die abgedrehten schmalen in Längsrichtung des Sechskants verlaufenden Zylinderflächen 25 (siehe Figur 5c) benachbarte Kammern 23 voneinander trennen und auch weitgehend gegeneinander abdichten.

Auf ein Abdrehen der in Figur 5b erkennbaren Kanten 14 kann jedoch auch ganz oder teilweise verzichtet werden. Dies ist der Fall bei dem in den Figuren 1 bis 5b gezeigten Ausführungsbeispiel. Der Durchmesser des dabei gewählten Sechskantkörpers, gemessen zwischen zwei diametral gegenüber liegenden Kanten, ist nur geringfügig größer, beispielsweise 0,2 mm, als der Durchmesser R der Aufnahmebohrung 22, so daß an der Außenseite des Aufnahmekopfes Vorsprünge 14 entstehen, die in die Innenwand der Aufnahmebohrung 22 hineinragen. Dies hat zur Folge, daß beim erstmaligen Einsetzen des Werkzeugeinsatzes 10 in die Werkzeug-Ausnehmung 21 die in Längsrichtung des Aufnahmekopfes 12 verlaufenden Kanten (Vorsprünge) des Sechskantkörpers in das Material der Werkzeugspritzseite 20a eindringen und hierbei Führungsnuten 15 in die Wand der Aufnahmebohrung 22 schneiden bzw. hobeln.

Wird nach einer Demontage des Werkzeugeinsatzes dieser oder ein mit entsprechenden Vorsprüngen versehener neuer Werkzeugeinsatz in die Werkzeug-Ausnehmung 21 eingesetzt, so ist die gewünschte Drehwinkellage des Werkzeugeinsatzes durch die bereits eingeschnittenen Führungsnuten 15 exakt vorgegeben. Die definierte Drehwinkellage hat den Vorteil, daß Zuführkanal 31 und Abführkanal 32 stets dieselbe günstige Lage relativ zur jeweils angrenzenden Kammer 23 einnehmen. Ferner ist eine exakt definierte Drehwinkellage dann erforderlich, wenn der Übergang zwischen dem Paßteil 11 und der Kavität 20b schräg in Bezug auf die Längsachse des Werkzeugeinsatzes verläuft (nicht dargestellt). Im Prinzip genügt zur Erzielung dieser Vorteile bereits ein einziger in die Wand der Aufnahmebohrung einschneider Vorsprung am Aufnahmekopf.

Bei dem gezeigten Ausführungsbeispiel besteht eine Verbindung zwischen den sechs Kammern 23 nur über den Spalt a zwischen dem kegelstumpf-förmigen Übergangsstück 19 und dem kegelstumpf-förmigen Boden des Aufnahmekopfes 12. Untersuchungen haben gezeigt, daß bei Zufuhr von Kühlmittel über den Zuführkanal 31 dieses in eine erste Kammer 23 einströmt, in dieser großflächig nach unten zum Spalt a strömt, dann in die beiden benachbarten Kammern praktisch bis zur oberen Begrenzung dieser Kammern einströmt und wieder zurückströmt, wie die durch die Pfeillinien b in Figur 4 angedeutet ist, und dann in diejenige Kammer einströmt, an die der Abführkanal 32 für das Kühlmittel angeschlossen ist. Auf diese Weise wird eine sehr effektive Kühlung des Werkzeugeinsatzes erzielt.

Natürlich kann die Verbindung zwischen benachbarten Kammern statt über den Spalt a auch dadurch geschaffen werden, daß an einer oder mehreren geeigneten Stellen die Kanten des Sechskant über eine gewisse achsiale Länge soweit zurückgenommen werden, daß ein Durchflußspalt zwischen benachbarten Kammern entsteht. Die Kühlung ist jedoch besonders intensiv, wenn der Zuführkanal 31 und der Abführkanal 32 möglichst weit oben im Sinne der Figur 2 liegen und die Verbindungen zwischen den Kammer möglichst weit unten im Sinne der Figur 2, also im Bereich des Spaltes a, liegen.

Um die für das erstmalige Eindrücken des Werkzeugeinsatz in das Werkzeug erforderliche Kraft klein zu halten, erstreckt sich bei dem gezeigten Ausführungsbeispiel der Figuren 1 bis 5b die nicht weggenommene Kante 14 nur über einen im Sinne der Figur 2 unteren Abschnitt 17a des Aufnahmekopfes 12. Die Figuren 5a und 5b zeigen den sich dabei ergebenden Aufbau im oberen beziehungsweise unteren Teil der Aufnahmebohrung 22 bei eingesetztem Werkzeugeinsatz. Wie Figur 5a zeigt, erfolgt dabei im oberen Teil die Trennung und ausreichende Dichtung zwischen benachbarten Kammer im wesentlichen über längs zweier Berührungslinien zwischen Werkzeugspritzseite und Werkzeugeinsatz.

Figur 6 zeigt eine mögliche Weiterbildung der in den Figuren 1 bis 5b gezeigten Ausführungsform. Hier sind die Kanten 14 des Sechskantkörpers auch an dem im Sinne der Zeichnung unteren Ende des Aufnahmekopfes 12 um eine kleine Strecke c weggenommen. Dies hat den Vorteil, daß man beim Einsetzen des Werkzeugeinsatzes 10 in die Ausnehmung 21 im Werkzeug auf einfache Weise eine gute Zentrierung erhält. Wenn die Schneidkante 14 ansetzt, hat das zylindrische Paßteil 11 nämlich in der Regel noch nicht die entsprechende Aufnahmebohrung 24 erreicht, so daß ohne den Abschnitt c die Gefahr einer nicht-konzentrischen Lage des Aufnahmekopfes 12 in der Aufnahmebohrung 22 besteht.

Außerdem ist in Figur 6 am unteren Ende des Schneidkantenvorsprungs 14 eine Rille 13 vorgesehen. Sie dient einerseits dazu, einen scharfen Schneidkantenanfang zu erhalten und zum anderen zur Aufnahme der beim Schneiden der Führungsnut anfallenden Späne.

Die Erfindung ist nicht auf die gezeigten Ausführungsbeispiele beschränkt, sondern kann im Rahmen der Patentansprüche in vielfacher Weise variiert werden. So kann der in den Figuren gezeigte regelmäßigen Sechskantkörper 17 durch irgendeinen anderer regelmäßigen oder unregelmäßigen Mehrkantkörper ersetzt werden.

Im Prinzip wird die erfinderische Idee bereits durch zwei irgendwie beschaffenen Hohlräume (Kammern) zwischen der Wand der Aufnahmebohrung 22 und dem Aufnahmekopf 12 des Werkzeugeinsatzes verwirklicht, von denen der eine mit dem Kühlmittel-Zuführkanal 31 und der andere mit dem Kühlmittel-Abführkanal 32 in Verbindung steht und wobei die beiden Hohlräume über einen Strömungskanal miteinander in Verbindung stehen, der vorzugsweise in seiner Höhenlage gegenüber der Höhenlage von Zuführ- und Abführkanal versetzt ist. Grundsätzlich kann der Hohlraum teilweise durch Herausnahme von Material aus der Innenwand der im Werkzeug vorhandenen Aufnahmebohrung 22 gebildet werden.

## Patentansprüche

1. Werkzeugeinsatz für den Anschnitt einer Heißkanaldüse für eine Spritzgießmaschine, welcher Werkzeugeinsatz (10) einen Aufnahmekopf (12) zur Aufnahme des vorderen werkzeugseitigen Teils einer Düse hat und seinerseits in eine entsprechend bemessene Ausnehmung (21) des Werkzeugs (20) einsetzbar ist, wobei mindestens zwei im wesentlichen voneinander getrennte Hohlräume (23) zwischen der Außenwand (12a) des Aufnahmekopfes (12) des Werkzeugeinsatz (10) und der Wand der Ausnehmung (21) im Werkzeug (20) vorhanden sind, von denen der eine Hohlraum (23) in Verbindung mit dem im Werkzeug vorhandenen Zuflusskanal (31) für ein Kühlmittel steht und der andere Hohlraum in Verbindung mit dem im Werkzeug vorhandenen Abflusskanal (32) für das Kühlmittel steht, und mit mindestens eine Strömungsverbindung zwischen den mindestens zwei Hohlräumen (23), welche Strömungsverbindung vorzugsweise möglichst weit von den Mündungen der genannten Kühlmittelkanäle (31,32) im Werkzeug entfernt liegt, **da-durch gekennzeichnet**, dass der Werkzeugeinsatz (10) mit einem vorderen zylindrischen Passteil (11) mit Fließkanal (11a) versehen ist, dass die Ausnehmung (21) im Werkzeug einen als Aufnahmebohrung dienenden kreiszylindrisch Abschnitt (22) für die Aufnahme des im wesentlichen kreiszylindrischen Aufnahmekopfes (12) des werkzeugeinsatzes (10) hat und dass die genannten Hohlräume (23) durch Abflachungen des kreiszylindrischen Aufnahmekopfes gebildet werden.

2. Werkzeugeinsatz nach Anspruch 1, **dadurch gekennzeichnet, dass** der Aufnahmekopf (12) zumindest längs eines Teil seiner Länge als ein regemäßiger oder unregelmäßiger Mehrkantkörper (17) ausgebildet ist, wobei die Kanten (14) des Mehrkantkörpers die Grenzen zwischen benachbarten Hohlräume (23) bilden.

3. Werkzeugeinsatz nach Anspruch 1, **dadurch gekennzeichnet, dass** der Aufnahmekopf (12) zumindest längs eines Teil seiner Länge als ein regemäßiger oder unregelmäßiger Mehrkantkörper (17) ausgebildet ist, wobei der Radius des Mehrkantkörpers an der Kantenstelle etwas größer ist als der Radius (R) der Aufnahmebohrung (22), diese Kanten aber bis auf den Radius (R) der Aufnahmebohrung (22) zurückgenommen sind (Figur 5c).

4. werkzeugeinsatz nach einem der Ansprüche 2 oder 3, **dadurch gekennzeichnet, dass** der Mehrkantkörper ein regelmäßiger Sechskant ist.

5. werkzeugeinsatz nach einem der vorhergehenden Ansprüche, **dadurch gekennzeichnet, dass** die genannte Verbindung zwischen den Hohlräumen (23) über einen im Durchmesser verkleinerten Abschnitt des zylindrischen Aufnahmekopfes (12) und/oder über einen Spaltabstand (a) zwischen einem kegelstumpf-förmigen Übergangsstück (19) vom Aufnahmekopf (12) zum zylindrischen Passteil (11) und dem entsprechend kegelstumpf-förmigen Boden (29) der Ausnehmung (21) gebildet wird.

6. Werkzeugeinsatz nach einem der Ansprüche 1, 2, 4 und 5, **dadurch gekennzeichnet, dass** der Aufnahmekopf (12) an seiner Außenwand (12a) mindestens einen schneidfähigen Vorsprung (14) hat, der so beschaffen ist, dass er beim Einschieben des werkzeugeinsatzes (10) in die Ausnehmung (21) im Werkzeug eine Führungsnut (15) in die Innenwand der Aufnahmebohrung (22) im Werkzeug zu schneiden vermag.

7. Werkzeugeinsatz nach Anspruch 6, **dadurch gekennzeichnet, dass** schneidfähige Vorsprünge durch die Kanten (14) des Mehrkantkörpers dadurch gebildet werden, dass der Radius des Mehrkants an der Kantenstelle etwas größer ist als der Radius (R) der Aufnahmebohrung (22).

8. Werkzeugeinsatz nach einem der Ansprüche 6 und 7, **dadurch gekennzeichnet, dass** die Kanten der schneidfähigen Vorsprünge (14) leicht abgeflacht sind und vorzugsweise auf dem Umfang eines Kreise liegen.

9. Werkzeugeinsatz nach einem der Ansprüche 6 bis 8, **dadurch gekennzeichnet, dass** die schneidfähigen Vorsprünge (14) sich nur längs eines Teils des zylindrischen Aufnahmekopfes (12) erstrecken, und zwar vorzugsweise über einen Abschnitt nahe des zum Werkzeug gerichteten Endes des Aufnahmekopfes (12).

## Claims

1. Tool insert for the gate of a hot runner nozzle for an injection moulding machine, which tool insert (10) comprises a receptacle head (12) for accommodating the tool-facing frontal portion of a nozzle, which receptacle head (12) for its part is insertable into a correspondingly dimensioned recess (21) in the tool (20), with at least two hollow spaces (23), which are essentially separated from each other, between the outer wall (12a) of the receptacle head (12) of said tool insert (10) and the wall of the recess (21) in the tool (20), with one of the hollow spaces (23) being connected to the coolant supply channel (31) existing in the tool, and the other hollow space being connected to the coolant discharge channel (32) existing in the tool, and with at least one flow-connection between said at least two hollow spaces (23), which flow connection is preferably located as far as possible away from the openings of said coolant channels (31,32) in the tool, **characterized in that** said tool insert (10) **is** provided **with** a frontal cylindrical fitting part (11) having a flow channel (11a), that said recess (21) in the tool is provided with a circular cylindrical portion (22) serving as receptacle bore for reception of the essentially circular cylindrical receptacle head (12) of the tool insert (10), and that said hollow spaces (23) are formed by flattenings on the circular cylindrical receptacle head.

2. Tool insert according to claim 1, **characterized in that** the receptacle head (12) is formed at least along part of its length as a regular or irregular multiple-cornered body (17) whereby the edges (14) of said multiple-cornered body form the boundaries between adjacent hollow spaces (23).

3. Tool insert according to claim 1, **characterized in that**, the receptacle head (12) is formed at least along part of its length as a regular or irregular multiple-cornered body (17), the radius of the multiple-cornered body being somewhat greater at the location of the edges than the radius (R) of the receptacle bore, but whereby said edges are flattened to the radius (R) of the receptacle bore (22) (Figure 5c).

4. Tool insert according to claim 2 or 3, **characterized in that** said multiple-cornered body is a regular hexagon.

5. Tool insert according to any of the preceding claims, **characterized in that** said connection between the hollow spaces (23) is formed by a diameter-reduced portion of the cylindrical receptacle head (12) and/or by a gap (a) between a truncated cone-like transition part (19) from said receptacle head (12) to the cylindrical fitting part (11) and the respective truncated cone-like bottom (29) of the recess (21).

6. Tool insert according to any of claims 1, 2, 3, and 5, **characterized in that** the receptacle head (12) is provided at its outer wall (12a) with at least one cutting-qualified projection (14) which is adapted such as to cut a guiding groove into the inner wall of the receptacle bore (22) of the tool when the tool insert (10) is moved into the recess (21) of the tool.

7. Tool insert according to claim 6, c**haracterized** in that cutting-qualified projections are formed by the edges (14) of said multiple-cornered body in such a way that the radius of the multiple-cornered body is somewhat greater than the radius (R) of the receptacle bore (22).

8. Tool insert according to any of claims 6 and 7, **characterized in that** the edges of the cutting-qualified projections (14) are slightly flattened and are preferably arranged on the circumference of a circle.

9. Tool insert according to claim 6 to 8, **characterized in that** said cutting-qualified projections (14) extend only along a portion of the cylindrical receptacle head (12), and in fact preferably along a section near the end of the receptacle head (12) facing the tool.

## Revendications

1. Insert de moule pour le seuil d'injection d'une buse à canal chaud d'une presse à injecter, lequel insert (10) de moule a une tête (12) de réception de la partie avant, du côté du moule, d'une buse et peut, de son côté, être inséré dans un évidement (21) proportionné d'une manière adéquate du moule (20), dans lequel il y a au moins deux cavités (23), sensiblement séparées l'une de l'autre, entre la paroi (12a) extérieure de la tête (12) de réception de l'insert (10) du moule et la paroi de l'évidement (21) dans le moule (20), l'une des cavités (23) communiquant avec le canal (31) d'arrivée d'un fluide de refroidissement présent dans le moule et l'autre cavité communiquant avec le canal (32) d'évacuation du fluide de refroidissement présent dans le moule et comprenant au moins une liaison fluidique entre les au moins deux cavités (23), laquelle liaison fluidique est de préférence aussi éloignée que possible des embouchures des canaux (31, 32) mentionnés pour le fluide de refroidissement du moule, **caractérisé en ce que** l'insert (10) de moule est pourvu d'une partie (11) d'adaptation avant, cylindrique, ayant un canal (11a d'écoulement, **en ce que** l'évidement (21) du moule a un tronçon (22) cylindrique de section circulaire servant de trou de réception, pour la réception de la tête (12) de réception sensiblement cylindrique de section circulaire de l'insert (10) du moule et **en ce que** les cavités (23) mentionnées sont formées par des méplats de la tête de réception cylindrique de section circulaire.

2. Insert de moule suivant la revendication 1, **caractérisé en ce que** la tête (12) de réception est, au moins sur une partie de sa longueur, constituée sous la forme d'une pièce (17) polygonale régulière ou irrégulière, les arêtes (14) de la pièce polygonale formant les limites entre des cavités (23) voisines.

3. Insert de moule suivant la revendication 1, **caractérisé en ce que** la tête (12) de réception est, au moins sur une partie de sa longueur, constituée sous la forme d'une pièce (17) polygonale régulière ou irrégulière, le rayon de la pièce polygonale étant un peu plus grand aux endroits des arêtes que le rayon (R) du trou (22) de réception, mais ces arêtes étant ramenées jusqu'au rayon (R) du trou (22) de réception (figure 5c) .

4. Insert de moule suivant l'une des revendications 2 ou 3, **caractérisé en ce que** la pièce polygonale est un six pans régulier.

5. Insert de moule suivant l'une des revendications précédentes, **caractérisé en ce que** la liaison mentionnée entre les cavités (23) est formée par un tronçon de diamètre rapetissé de la tête (12) de réception cylindrique et/ou par un intervalle (a) entre une pièce (19) de transition, en forme de tronc de cône, de la tête (12) de réception à la partie (11) d'adaptation cylindrique et le fond (29) correspondant, en forme de tronc de cône, de l'évidement (21).

6. Insert de moule suivant l'une des revendications 1, 2, 4 et 5, **caractérisé en ce que** la tête (12) de réception a, sur la paroi (12a) extérieure, au moins une saillie (14) susceptible d'être coupée et telle que, lors de l'insertion de l'insert (10) du moule dans l'évidement (21) du moule, une rainure (15) de guidage, dans la paroi intérieure du trou (22) de réception, peut être coupée dans le moule.

7. Insert de moule suivant la revendication 6, **caractérisé en ce que** les saillies susceptibles d'être coupées sont formées par les arêtes (14) de la pièce polygonale, de manière à ce que le rayon de la pièce polygonale aux endroits des arêtes soit un peu plus grand que le rayon (R) du trou (22) de réception.

8. Insert de moule suivant l'une des revendications 6 et 7, **caractérisé en ce que** les arêtes des saillies (14) pouvant être coupées sont aplaties légèrement et sont de préférence sur le périmètre d'un cercle.

9. Insert de moule suivant l'une des revendications 6 à 8, **caractérisé en ce que** les saillies (14) susceptibles d'être coupées s'étendent seulement sur une partie de la tête (12) de réception cylindrique et en fait, de préférence, sur un tronçon proche de l'extrémité, tourné vers le moule, de la tête (12) de réception.
